# EUROPEAN PATENT APPLICATION

(11) **EP 1 602 837 A1**
(43) Date of publication of application: **07.12.2005**
(21) Application number: 04714057.9
(22) Date of filing: 24.02.2004
(51) Int. Cl.: F16B 2/24

(54) **PART-COUPLING CLAMP (VARIANTS)**

(30) Priority: 25.02.2003 RU 2003105044; 20.02.2004 RU 2004105490
(71) Applicant: Klevtsov, Viktor Iliich, St. Petersbug, 193168 (RU)
(72) Inventor: KLEVTSOV, Viktor Iliich, St.Petersburg, 193168 (RU); KLEVTSOV, Semen Viktorovich, St.Petersburg, 193168 (RU)
(74) Representative: Laako, Tero Jussi
(86) International application number: PCT/RU2004/000065
(87) International publication number: WO 2004/076868

(57) **Abstract**

The utility model relates to fasteners, in particular to part-coupling clamps, mainly for joining built-up wooden constructions, in particular floors. In the first variant, the inventive part-coupling clamp is embodied in the form of a metal strip (1) provided with bent edges (2, 3) on both sides thereof. Said strip has a L-shaped recess (4) which forms an elastic tab (5) and is embodied along the fold line of one of the edges in such a way that the bent edge can be held in a setting position, said edge being bent towards the centre of the strip on the one side thereof. In the second variant, said part-coupling clamp comprises a body (17) provided with at least one elastic pressure element (18) and with at least one arrester (20) for retaining said elastic pressure element in the setting position. The elastic pressure element is fixed to the body by means of a detachable or permanent connection. Said arrester for retaining the elastic pressure element in the setting position can be fixed to the body by means of a detachable or permanent connection. Said utility model simplifies the structural design of the clamp and reduces the production cost thereof.

## Description

### Technical field

The utility model relates to fasteners, mainly for joining built-up wooden constructions, in particular floors.

### Background art

A part-coupling clamp is known, in particular for joining of wooden elements, in the cross direction of each of which a through hole is made. The fastener possesses a rope running through the holes and folded through the rope holder installed on the last element of the set, the free ends of the rope are fixed providing its tension. The rope holder is made as a pin with a head and installed in the rope hole coaxially with it, a through hole in a cross direction is made in the pin, and the pin head is installed on a metal plate rigidly fixed on the wooden element, provided with the pin head return stupor, RU, C1, 2192525.

Structural design complexity and low reliability are the shortcomings of this device.

There is a clamp including a body in a form of a cramp with a tape bent like a ring. The body is provided with an elastic pressure element and an arrester for retaining said elastic pressure elements in the setting position. The elastic pressure element is a catch fixed to the tape within the fastening section and provided with a spring. The tape interlocking section is supposed for interaction with the catch overrunning clutch, the first end of the spring is located with the rigid support regarding the fastening section, and the catch has a fixing element with the possibility of disfixing (the arrester for retaining the elastic pressure element in the setting position), retaining the spring in the compressed state in a fastened position, and the second end of the spring interacting with the clamp is connected with the overrunning clutch in such a way, that during disfixing of the said element the tape is firmly retained in the overrunning clutch and clasped by the unlocked spring, RU, C2, 2201548.

This technical solution has been assumed as the prototype for both variants of real utility model.

Structural design complexity and low reliability are the shortcomings of the prototype.

### Summary of the utility model

The first variant of utility model is based on the solution of the task of creation of a simple inexpensive part-coupling clamp.

The second variant of utility model is based on the solution of the task of creation of a simple part-coupling clamp, which would have a low cost and high corrosion resistance.

According to the first variant of utility model the task is solved at the expense of the fact, that in the part-coupling clamp made as a metal strip, the strip is provided with bent edges on both sides. Said strip has an L-shaped recess which forms an elastic tab and is embodied along the fold line of one of the edges in such a way that the bent edge can be held in a setting position, said edge being bent towards the centre of the strip on the one side thereof. The strip along the fold line of the other bent edge can have an L-shaped recess which forms an elastic tab able of holding the bent edge in the setting position, said edge being bent towards the center of the strip. The strip along the fold line symmetrically to the longitudinal axis can have a second L-shaped recess and an edge bent towards the center of the strip, the stripe can have L-shaped recesses and an edge bent from both sides symmetrically to the longitudinal axis of the strip. The strip can be provided with retaining dowels or have holes for fasteners.

According to the second variant of utility model the task is solved at the expense of the fact, that in the part-coupling clamp comprising a body provided with at least one elastic pressure element and at least one arrester for retaining said elastic pressure element in the setting position, the elastic pressure element is fixed to the body by means of a detachable or permanent connection. Said attester for retaining the elastic pressure elements in the setting position can be fixed to the body by means of a detachable or permanent connection.

The applicant did not reveal any sources containing information on technical solutions identical to this utility model , which makes it possible to come to the conclusion that it complies with the criterion of "novelty" (N).

### Brief description of the drawings

Further the utility model is explained by detailed description of examples of its implementation with reference to the drawings depicting the following:
Fig.1 - a part-coupling clamp (Variant 1) with one elastic tab;
Fig.2 - a clamp (Variant 1) with opposite elastic tabs;
Fig.3 - a clamp (Variant 1) with two symmetrical elastic tabs;
Fig.4 - a clamp (Variant 1) with four elastic tabs;
Fig.5 - a clamp (Variant 1) with dowels and holes for fasteners;
Fig.6 - a clamp (Variant 1), A-A cross-section as per Fig.1 along with the parts to be joined;
Fig.7 - a clamp (Variant 2), top view (setting position);
Fig.8 - a clamp (Variant 2), B-B cross-section as per Fig.7;
Fig.9 - a clamp (Variant 2), axonometric view (setting position);
Fig. 10 - a clamp (Variant 2), B-B cross-section along with the parts to be joined in an enlarged scale.

### The best variant of utility model implementation

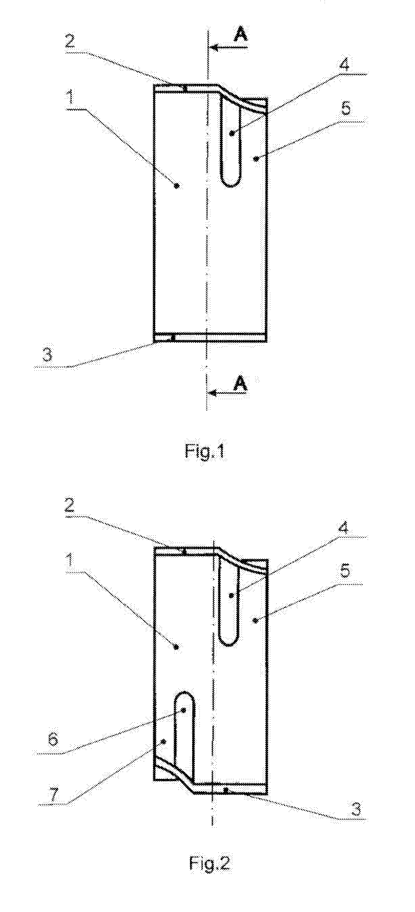

The part-coupling clamp (Variant 1, Fig.1) is embodied in the form of a metal strip 1 (e.g. Y8A steel) provided with edges 2, 3 on both sides thereof bent in one and the same direction. The strip along the fold line of edge 2 has an L-shaped recess 4, which forms an elastic tab 5. Edge 2 from the side of tab 5 is bent towards the center of strip 1, the bending angle reaches between 2 and 15 degrees.

The clamp (Variant 1, Fig.2) can be embodied in the form of a metal strip 1 provided with edges 2, 3 on both sides thereof bent in one and the same direction. The strip along the fold line of edges 2, 3 has L-shaped recesses 4, 6 accordingly located asymmetrically to the transverse axis of line 1, forming elastic tabs 5, 7 accordingly. Edges 2, 3 on the side of tabs 5, 7 are bent towards the center of strip 1.

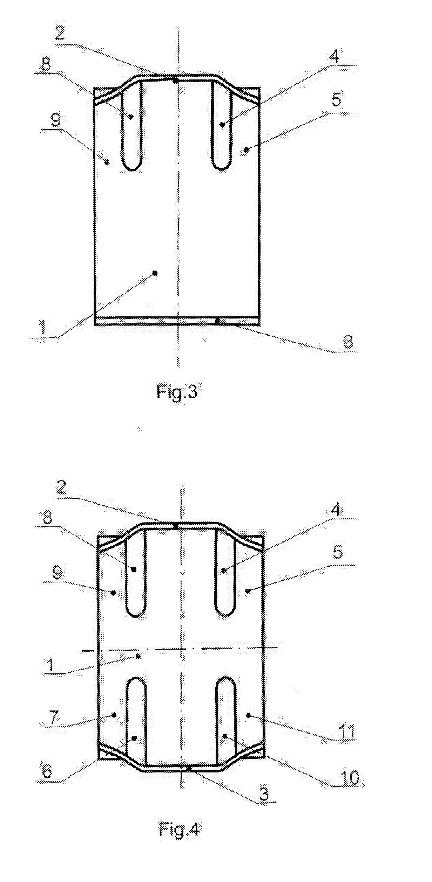

The clamp (Variant 1, Fig.3) can be embodied in the form of a metal strip 1 provided with edges 2, 3 on both sides thereof bent in one and the same direction. Strip 1 along the fold line of edge 2 has L-shaped recesses 4, 8 located symmetrically to the longitudinal axis of strip 1, forming elastic tabs 5, 9 accordingly. Sides of edge 2 are bent towards the center of strip 1.

Clamp (Variant 1, Fig.4) can be embodied in the form of a metal strip 1 with edges 2,3 on both sides thereof bent in one and the same direction. Strip 1 along the fold line of edges 2, 3 has L-shaped recesses 4, 8 and 6, 10 accordingly, located symmetrically to the longitudinal and transverse axes of strip 1, forming elastic tabs 5, 9 and 7, 11 accordingly. Sides of edges 2, 3 are bent towards the center of strip 1.

Elastic tabs 5, 7, 9, 11 are supposed for retaining of respective bent edges 2, 3 in the setting position.

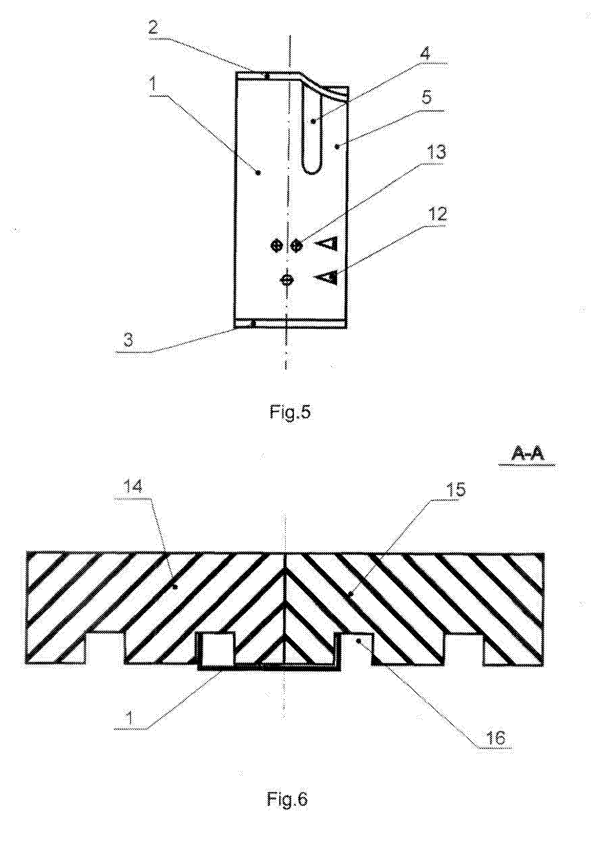

Clamp (Variant 1, Fig.5) is embodied in the form of a metal strip 1 with edges 2, 3 on both sides thereof bent in one and the same direction. Strip 1 along the fold line of edge 2 has an L-shaped recess 4 forming elastic tab 5. Edge 2 on the side of tab 5 is bent towards the center of strip 1. Strip 1 can be provided with retaining dowels 12. Strip 1 can have holes 13 for fasteners.

For joining parts 14 and 15 (Fig.6), e.g. floor boards, the preliminary bent sides of edge 2 (Fig.1) shall be bent to the opposite direction and fixed by tab 5 lifted upwards. Further the clamp is installed in recess 16 of the abutting board 15, the next board 14 shall be joined with board 15, then it shall be settled from above until edge 2 is released.

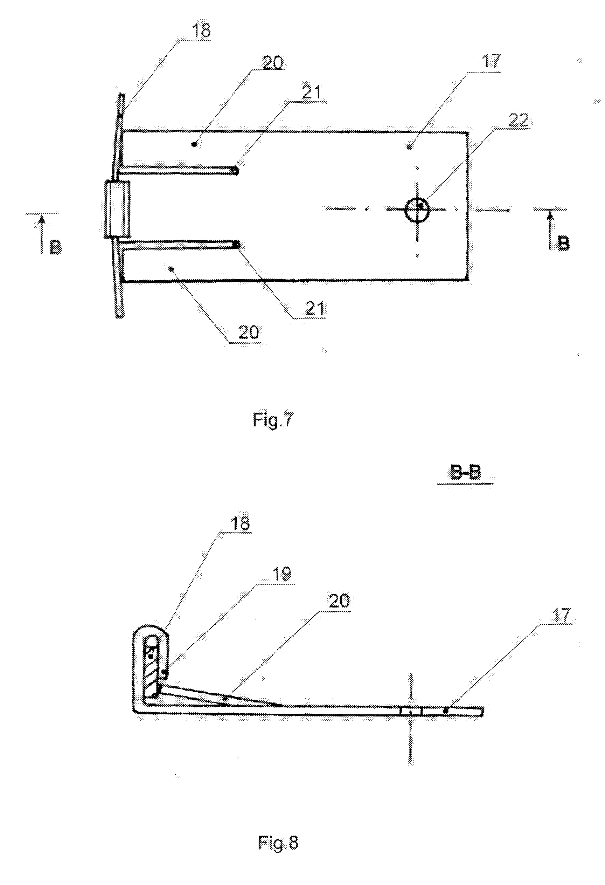

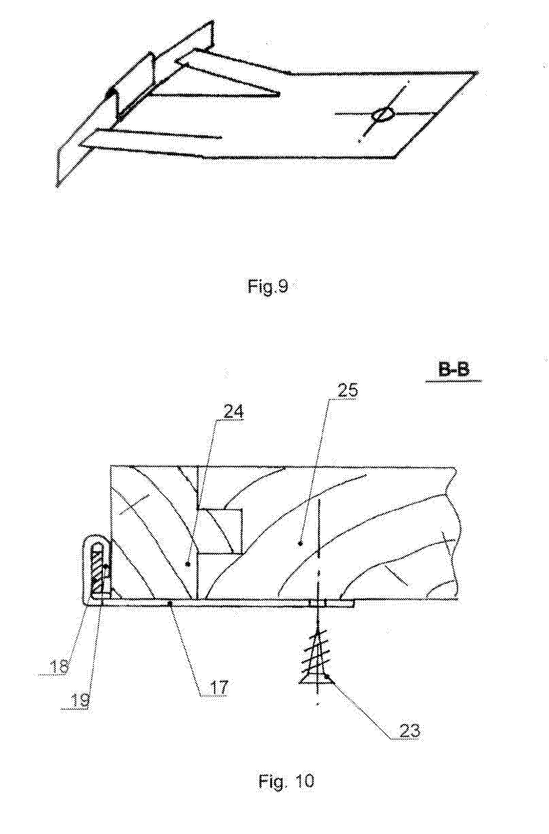

The part-coupling clamp (Variant 2, Fig.7-10) comprises body 17 embodied in this particular example in the form of strip 17 of galvanized steel.

Body 17 is provided with elastic pressure elements 18, embodied in a form of a narrow strip of stainless spring steel. The elastic pressure element 18 is fixed to body 17 in this particular example by means of detachable connection 19 of the "fold" type. Besides, it is possible to fix element 18 to body 17 by means of permanent connection, e.g. contact welding. The body has two arresters 20 for retaining of the elastic pressure elements 18 in the setting position. In the given example arresters 20 represent fragments of body 17 separated from it by recesses 21. It is also possible to embody arresters 20 in the form of separate elements fixed to body 17 by means of detachable of permanent connections. Body 17 has a hole 22 for screw 23. Thanks to the fact that the elastic pressure element is made not together with the body, but as a separate element 18 of stainless spring steel fixed to body 17, the clamp has a high corrosion resistance.

For joining of parts 24 and 25 between themselves the clamp shall be brought to the setting position (Fig. 7, 8, 9), the body 17 shall be fixed to one of them, in particular, to part 25 by means of screw 23. Then, by pressing body 17, arresters 20 are released from the contact with the elastic pressure element 18, and the latter clasps part 24 to part 25.

### Industrial applicability

In order to implement the clamp for joining parts under both variants of utility model known equipment and common structural materials were used, which provides compliance of the utility model to the criterion "industrial applicability" (IA).

## Claims

1. A part-coupling clamp embodied in the form of a metal strip, **characterized in that** the strip is made with bent edges on both sides thereof, the strip along the fold line of one of the edges has an L-shaped recess forming an elastic tab made in such a way, that it is possible to retain the bent edge in the setting position, said edge being bent towards the center of the strip on this side.

2. Clamp under p.1, **characterized in that** the strip along the fold line of the other bent edge has an L-shaped recess, which forms an elastic tab embodied with the possibility to retain the bent edge in the setting position, said edge being bent towards the center of the strip on this side.

3. Clamp under p.1, **characterized in that** the strip along the fold line symmetrically to the longitudinal axis has the second L-shaped recess and the edge bent towards the center of the strip.

4. Clamp under p.3, **characterized in that** the strip has L-shaped recesses and an edge bent on both sides symmetrically to the transverse axes of the strip.

5. Clamp under p1, **characterized in that** the strip is provided with the retaining dowels.

6. Clamp under p.1, **characterized in that** the strip has holes for fasteners.

7. A part-coupling clamp including a body provided with at least one elastic pressure elements and at least one arrester for retaining of said elastic pressure elements in the setting position, **characterized in that** the elastic pressure element is fixed to the body by means of a detachable or permanent connection.

8. Clamp under p.7, **characterized in that** the arrester for retaining of the elastic pressure element in the setting position is fixed to the body by means of a detachable or permanent connection.
